# EUROPEAN PATENT APPLICATION

(11) **EP 1 965 297 A1**
(43) Date of publication of application: **03.09.2008**
(21) Application number: 07103452.4
(22) Date of filing: 02.03.2007
(51) Int. Cl.: G06F 3/06

(54) **Memory partitioning method**

(71) Applicant: Inventec Corporation, Shih-Lin District 111 Taipei (TW)
(72) Inventor: Weng, Wen-Chu, 111, Taipei (TW)
(74) Representative: 2K Patentanwälte Kewitz & Kollegen

(57) **Abstract**

A memory partitioning method is applied in a memory module having a plurality of physical blocks. The partitioning method includes the following steps. First, a partitioning command is received. Next, at least one first memory driving module and a second memory driving module are called according to the partitioning command. Then, at least one location code corresponding to one of the physical blocks is obtained according to the first memory driving module and/or the second memory driving module, and the physical blocks are divided into a first memory area and a second memory area according to the location code. Finally, the first memory driving module and the second memory driving module respectively partition the first memory area and the second memory area.

## Description

### BACKGROUND OF THE INVENTION

### Field of Invention

The invention relates to a memory partitioning method, and, in particular, to a memory partitioning method using multiple driving modules.

### Related Art

In modem computer systems, hard drives have been widely used. However, this kind of mass storage device, with a rotating magnetic medium, still has some drawbacks. These include, for example, inherent delay time, greater power loss and impact sensitivity. These problems may arise whenever the hard drive is being accessed. In addition, the size and the weight of the hard drive are excessively burdensome when the hard drive is used in a portable electronic device. Thus, the trend of using flash memory for mass storage device has recently become more popular.

Flash memory, which refers to a non-volatile random access memory (NVRAM), has developed rapidly in recent years. In flash memory, the stored data still can be held when the power is off. The NVRAM can be electronically erased and has the advantages of the low power consumption, high density, small size, high reliability, and the erasable and repeatedly programmable features. In addition, the flash memory may be formed into a portable storage device, such as a thumb drive or a USB hard drive, and may also serve as an auxiliary memory source for any typical electronic device.

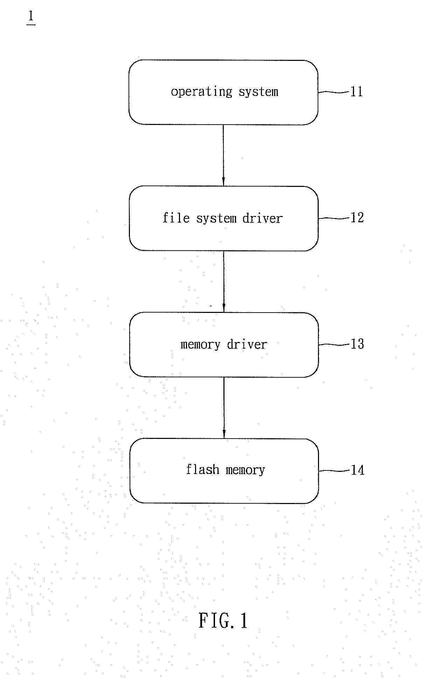

FIG. 1 is a schematic illustration showing a conventional method of driving a flash memory. Referring to FIG. 1, an electronic device 1 has an operating system 11, a file system driver 12, a memory driver 13 and a flash memory 14. The operating system 11 serves as an overall operation platform of the electronic device 1, and the file system driver 12 mainly undertakes the operations associated with files and data, such as reading operations, writing operations and deleting operations. In addition, the memory driver 13 drives the flash memory 14, which has a plurality of physical blocks for storing data. When the user needs to perform a file accessing operation on the flash memory 14, the operating system 11 first calls the file system driver 12, and then the file system driver 12 accesses the flash memory 14 by way of the memory driver 13.

In addition, the operating system 11 in the electronic device 1 can usually support the function of partitioning the flash memory 14 into multiple partitions. For example, the operating system of Windows Mobile 5.0 can partition the flash memory 14 into four partitions including a bootloader, a master boot record (MBR), an operating system (OS) and a TFAT partition, wherein the user can store data to only the TFAT partition.

However, due to the constraints of the operating system, the flash memory 14 only can be partitioned into the four partitions, and the function and the application of each partition have been defined and established. Thus, the function and the application of the flash memory 14 are restricted. For example, if another partition were created, the manufacturer could save a plurality of installation programs supporting multiple languages (e.g., Chinese, English, Japanese, and the like) into the flash memory 14 such that the product can be sold to various countries and the efficiency and the competitiveness of the flash memory 14 could be enhanced. At present, another method has to be found if more than four partitions are to be created. A present method is an M-Doc solution provided by M-System Company, in which the flash memory is partitioned into two blocks or a plurality of blocks so that the operating system thinks that two or multiple flash memories exist in one physical flash memory. However, the hardware for this method is relatively costly.

Thus, it is an important subject of the invention to provide a memory partitioning method for partitioning a memory into multiple partitions with no restriction on the number of partitions supported by the operating system and without increasing the hardware price.

### SUMMARY OF THE INVENTION

In view of the foregoing, the invention is to provide a memory partitioning method for partitioning a memory into multiple partitions with no restriction on the number of partitions supported by the operating system and without increasing the hardware price, such that the overall efficiency and the competitiveness can be enhanced.

To achieve the above, the invention discloses a memory partitioning method, which is applied in a memory module having a plurality of physical blocks. The partitioning method includes the following steps. First, a partitioning command is received. Next, at least one first memory driving module and a second memory driving module are called according to the partitioning command. Then, at least one location code corresponding to one of the physical blocks is obtained according to the first memory driving module and/or the second memory driving module, and the physical blocks are divided into a first memory area and a second memory area according to the location code. Finally, the first memory driving module and the second memory driving module respectively partition the first memory area and the second memory area.

As mentioned above, the memory partitioning method of the invention drives the first memory area of the memory module by the first memory driving module according to the set parameters and then drives the second memory area of the memory module by the second memory driving module according to the set parameters. Thus, the operating system of the electronic device recognizes the memory module as two independent memories according to the driving of the two memory driving modules. Thus, the operating system can partition the first memory area into multiple partitions via the first memory driving module, and partition the second memory area into multiple partitions via the second memory driving module. Consequently, the number of partitions of the memory module is not restricted to the number of partitions originally supported by the operating system and can reach at least two times the number of partitions supported by the original operating system. Thus, the overall efficiency and the application of the memory module can be enhanced. In addition, compared with the prior art, the invention can lower the hardware price and thus the cost, and enhance the product competitiveness without increasing the number of hardware elements of the memory module or cutting the memory module into multiple blocks.

### BRIEF DESCRIPTION OF THE DRAWINGS

The invention will become more fully understood from the detailed description given herein below illustration only, and thus is not limitative of the present invention, and wherein:

FIG. 1 is a schematic illustration showing a conventional method of driving a flash memory;

FIG. 2 is a block diagram showing an electronic device adopting a memory partitioning method according to a preferred embodiment of the invention;

FIG. 3 is a flow chart showing the memory partitioning method according to the preferred embodiment of the invention; and

FIG. 4 is a schematic illustration showing a corresponding relationship between physical blocks and logic blocks in the memory partitioning method according to the preferred embodiment of the invention.

### DETAILED DESCRIPTION OF THE INVENTION

The present invention will be apparent from the following detailed description, which proceeds with reference to the accompanying drawings, wherein the same references relate to the same elements.

The memory partitioning method according to the preferred embodiment of the invention is applied in an electronic device, which has a memory module. The electronic device of this embodiment may be a mobile communication device, such as a mobile phone, and the memory module may be a non-volatile memory, such as a flash memory having a plurality of physical blocks for storing data. The electronic device will be introduced first to facilitate the subsequent description of the memory partitioning method of this embodiment. In addition, the memory partitioning method of this embodiment may primarily be applied at the manufacturer end, for example, by the manufacturer or the assembler of the electronic device.

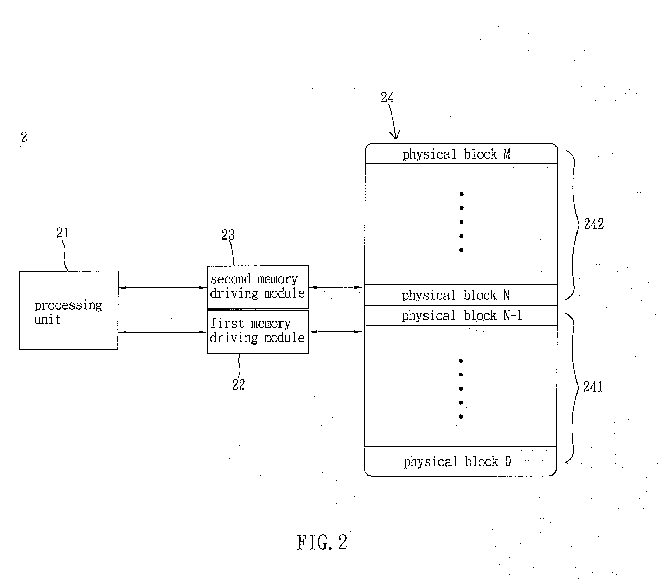

Referring to FIG. 2, an electronic device 2 includes a processing unit 21, a first memory driving module 22, a second memory driving module 23 and a memory module 24. The processing unit 21 is electrically connected to the first memory driving module 22 and the second memory driving module 23, and the first memory driving module 22 and the second memory driving module 23 are electrically connected to the memory module 24.

In addition, the processing unit 21 may include electronic elements, such as a central processing unit (CPU) and chipsets for performing data computing and processing operations, and a software module of an operation platform, such as an operating system and a file system driver. The first memory driving module 22 and the second memory driving module 23 drive the memory module 24 to access the data stored in the memory module 24.

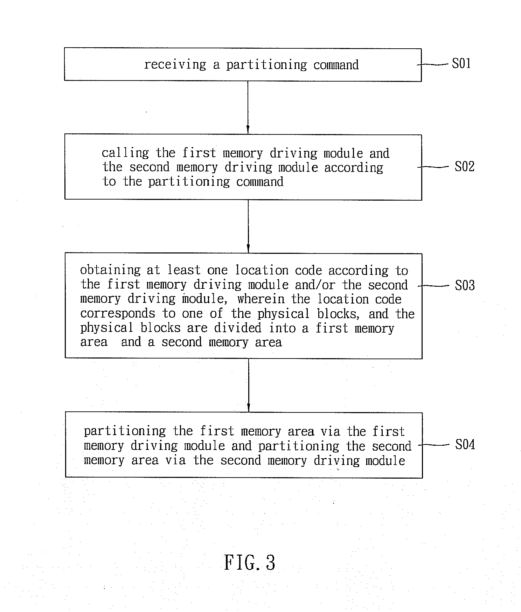

The memory partitioning method according to the preferred embodiment of the invention will be described with reference to FIGS. 3 and 2.

First, the memory partitioning method includes the step S01 of receiving a partitioning command. In this embodiment, the partitioning command may be originally stored in the electronic device 2, and the processing unit 21 may receive the partitioning command when the processing unit 21 senses the existence of memory module 24. Alternatively, the manufacturer can issue the partitioning command.

Furthermore, the memory partitioning method further includes the step S02 of calling the first memory driving module 22 and the second memory driving module 23 according to the partitioning command, and the step S03 of obtaining at least one location code according to the first memory driving module 22 and/or the second memory driving module 23. The location code corresponds to one of the physical blocks, and the physical blocks are divided into a first memory area 241 and a second memory area 242 according to the location code.

In this embodiment, the first memory driving module 22 records a first starting block parameter and a first block number parameter. The first starting block parameter represents a starting block of the physical blocks of the memory module 24 to be driven by the first memory driving module 22. The first block number parameter represents a total number of blocks among the physical blocks of the memory module 24 to be driven by the first memory driving module 22. The first memory driving module 22 can determine the physical blocks of the memory module 24, which may be driven by the first memory driving module 22 and are contained in the first memory area 241 in this case, according to the first starting block parameter and the first block number parameter.

Similarly, the second memory driving module 23 records a second starting block parameter and a second block number parameter. The second starting block parameter represents a starting block of the physical blocks of the memory module 24 to be driven by the second memory driving module 23. The second block number parameter represents the total number of blocks among the physical blocks of the memory module 24 to be driven by the second memory driving module 23. The second memory driving module 23 can determine the physical blocks of the memory module 24, which may be driven by the second memory driving module 23 and are contained in the second memory area 242 in this case, according to the second starting block parameter and the second block number parameter.

In other words, when the processing unit 21 calls the first memory driving module 22 according to the partitioning command, it can obtain the location code according to the first starting block parameter and the first block number parameter recorded in the first memory driving module 22. For example, when the first starting block parameter is set as zero, the location code can be obtained according to the first block number parameter and corresponds to one of the physical blocks, and the physical blocks are divided into the first memory area 241 and the second memory area 242 according to the location code. An example will be described in the following. As shown in FIG. 2, when the first starting block parameter is set as zero and the first block number parameter is set as N, the physical blocks of the first memory area 241 numbered from the physical blocks 0 to N-1, and the location code can be obtained according to the first block number parameter. Herein, the location code is just equal to N, and the physical blocks are divided into the first memory area 241 and the second memory area 242 according to the location code.

Similarly, when the processing unit 21 calls the second memory driving module 23 according to the partitioning command, the location code may be obtained according to the second starting block parameter and the second block number parameter recorded in the second memory driving module 23. For example; when the second starting block parameter is not zero, the location code can be obtained according to the second block number parameter and corresponds to one of the physical blocks, and the physical blocks are divided into the first memory area 241 and the second memory area 242 according to the location code. An example will be illustrated in the following. As shown in FIG. 2, when the second starting block parameter is not zero, such as N, and the second block number parameter is set as M-N+1, the physical blocks of the second memory area 242 are numbered from the physical blocks N to M, and the location code may be obtained by the second block number parameter. Herein, the location code is equal to N, and the physical blocks are divided into the first memory area 241 and the second memory area 242 according to the location code.

The examples mentioned hereinabove are provided for the purpose of illustration only without restricting the scope of the invention, and the first memory area 241 does not necessarily have to be adjacent to the second memory area 242. It is to be specified that the memory module 24 of this embodiment is not physically "divided" into the first memory area 241 and the second memory area 242. In fact, the memory module 24 has the first memory area 241 and the second memory area 242 by virtue of the first memory driving module 22 and the second memory driving module 23 driving the memory module 24.

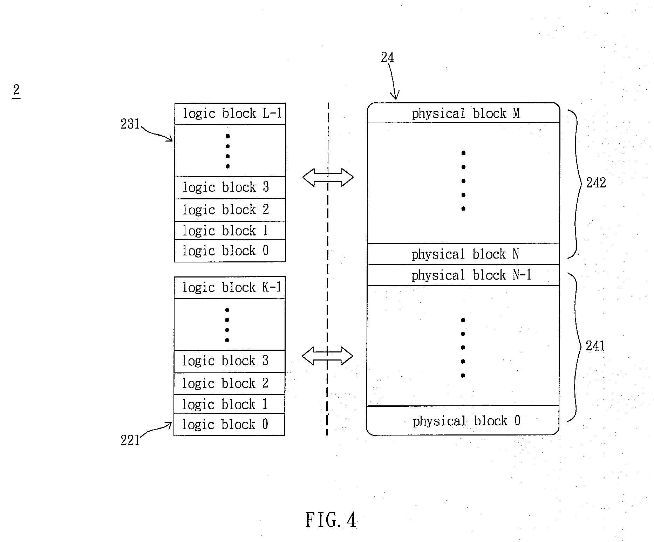

When the memory module 24 can be divided into the first memory area 241 and the second memory area 242 by the first memory driving module 22 and the second memory driving module 23, the memory partitioning method further includes the step S04 of partitioning the first memory area 241 via the first memory driving module 22 and partitioning the second memory area 242 via the second memory driving module 23. In addition, as shown in FIG. 4, the step S04 further includes: generating a first logic memory area 221, corresponding to the first memory area 241, via the first memory driving module 22; and generating a second logic memory area 231, corresponding to the second memory area 242, by the second memory driving module 23.

In general, because the processing unit 21 cannot directly recognize the addresses of the physical blocks of the memory module 24, the logic memory area has to be created by the memory driving module so that the processing unit 21 can recognize the logic memory area. Herein, the first memory driving module 22 generates the first logic memory area 221 and a mapping table. The first logic memory area 221 has a plurality of logic blocks corresponding to the physical blocks of the first memory area 241, and the mapping table has a mapping relationship between the logic blocks of the first logic memory area 221 and the corresponding physical blocks. In addition, the second memory driving module 23 generates the second logic memory area 231 and the mapping table, the second logic memory area 231 has a plurality of logic blocks corresponding to the physical blocks of the second memory area 242, and the mapping table has a mapping relationship between the logic blocks and the corresponding physical blocks.

In addition, the memory partitioning method further includes the steps of partitioning the first logic memory area 221 into at least one first logic partition, and partitioning the second logic memory area 231 into at least one second logic partition. In this embodiment, the processing unit 21 may partition the first logic memory area 221 into the first logic partition according to a partitioning program, and partition the second logic memory area 231 into the second logic partition. In general, the number of logic partitions has to be determined according to the operating system of the electronic device 2. For example, the operating system of Windows Mobile 5.0 can support four partitions. In this embodiment, because the two logic memory areas 221 and 231 exist, the number of partitions is two times that of the partitions supported by the operating system. That is, this embodiment can obtain eight partitions in the operating system of Windows Mobile 5.0.

In this embodiment, the first logic memory area 221 and the second logic memory area 231 may have different applications. For example, the first logic memory area 221 may be partitioned into a bootloader, a master boot record (MBR), an operating system (OS) and a TFAT partition, wherein the user can store data in the TFAT partition. In addition, the second logic memory area 231 can store the installation programs for supporting multiple languages, such as Chinese, Japanese, English, Arabic or the like. Consequently, the memory module 24 and the electronic device 2, such as the mobile phone, using the memory module 24 can be sold to the countries using the languages supported by the installation program. Thus, the manufacturer does not have to modify the installation program according to the countries using different languages and before selling the products to countries using their respective languages.

It is to be additionally specified that the installation program of the memory module 24 may be executed at the manufacturer end or the user end. Of course, in order to prevent the problem of installation errors at the user end, the manufacturer can execute the installation program and disable the second logic memory area 231 and the second memory driving module 23 corresponding to the second memory area 242 so as to hide the second memory area 242 and to prevent the user from incorrectly operating the second memory area 242, such as by executing an additional installation program.

In addition, it is to be noted that the modules other than the memory module 24 may be software modules stored in the electronic device 2 in this embodiment, and the central processing unit can read each of the software modules and then implement the function of each module in each device, such as an input device, a storage device or other software modules, in the electronic apparatus. However, it is to be noted that one of ordinary skills in the art may also manufacture the above-mentioned software module into the hardware, such as an application-specific integrated circuit (ASIC) chip, without contravening the spirit and the scope of the invention.

In summary, the memory partitioning method of the invention drives the first memory area of the memory module by the first memory driving module according to the set parameters and then drives the second memory area of the memory module by the second memory driving module according to the set parameters. Thus, the operating system of the electronic device recognizes the memory module as two independent memories according to the driving of the two memory driving modules. Thus, the operating system can partition the first memory area into multiple partitions via the first memory driving module, and partition the second memory area into multiple partitions via the second memory driving module. Consequently, the number of partitions of the memory module is not restricted to the number of partitions originally supported by the operating system and can reach at least two times the number of partitions supported by the original operating system. Thus, the overall efficiency and the application of the memory module can be enhanced. In addition, compared with the prior art, the invention can lower the hardware price and thus the cost, and enhance the product competitiveness without increasing the number of hardware elements of the memory module or cutting the memory module into multiple blocks.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A memory partitioning method applied to a memory module having a plurality of physical blocks, comprising :
receiving a partitioning command;
calling at least one first memory driving module and a second memory driving module according to the partitioning command;
obtaining at least one location code corresponding to one of the physical blocks according to the first memory driving module and/or the second memory driving module, wherein the physical blocks are divided into a first memory area and a second memory area according to the location code; and
partitioning the first memory area via the first memory driving module and partitioning the second memory area via the second memory driving module.

2. The method according to claim 1, wherein the location code is obtained according to a first starting block parameter and a first block number parameter recorded in the first memory driving module.

3. The method according to claim 2, wherein when the first starting block parameter is set as zero, the location code is obtained according to the first block number parameter.

4. The method according to claim 1, wherein the location code is obtained according to a second starting block parameter and a second block number parameter recorded in the second memory driving module.

5. The method according to claim 4, wherein when the second starting block parameter is not zero, the location code is obtained according to the second starting block parameter.

6. The method according to claim 1, wherein the step of partitioning the first memory area and the second memory area comprises:
generating a first logic memory area corresponding to the first memory area via the first memory driving module;
generating a second logic memory area corresponding to the second memory area via the second memory driving module;
partitioning the first logic memory area into at least one first logic partition; and
partitioning the second logic memory area into at least one second logic partition.

7. The method according to claim 1, wherein the first memory area is driven by the first memory driving module, and the second memory area is driven by the second memory driving module.

8. The method according to claim 1, wherein the memory module is a flash memory or a non-volatile memory.
